# EUROPEAN PATENT APPLICATION

(11) **EP 4 015 370 A1**
(43) Date of publication of application: **22.06.2022**
(21) Application number: 21215652.5
(22) Date of filing: 17.12.2021
(51) Int. Cl.: B64C 17/10, B64C 17/02, B64D 37/04

(54) **FUEL STORAGE SYSTEM FOR CONTROLLING THE CENTRE OF GRAVITY OF AN AIRCRAFT AND AIRCRAFT COMPRISING SUCH A FUEL STORAGE SYSTEM**

(30) Priority: 21.12.2020 HU 2000442
(71) Applicant: Steel Riders Kft., 3351 Verpelét (HU)
(72) Inventor: Gábor, Farkas, 3351 Verpelét (HU)
(74) Representative: Kacsuk, Zsófia

(57) **Abstract**

The subject of the present invention is a fuel storage system (10) for controlling the centre of gravity of an aircraft (100), comprising at least one fuel tank (12a) and a mounting element (20a) for mounting the fuel tank (12a) to the aircraft (100), wherein the mounting element (20a) is configured to enable the fuel tank (12a) to be displaced along a constraint path (K1) and to be releasably secured along the constraint path (K1).

The invention also relates to an aircraft (100) comprising a fuel storage system (10) according to the invention.

## Description

The invention relates to a fuel storage system for controlling the centre of gravity of an aircraft, the system comprising at least one fuel tank and a mounting element for mounting the fuel tank to the aircraft.

The invention further relates to an aircraft comprising such a fuel storage system.

For aircraft, especially light and ultra-light aircraft, it is important to have the correct weight distribution, i.e. that the centre of gravity of the aircraft is within the intended range during flight. An improper centre of gravity position can adversely affect the stability and controllability of the aircraft, which may ultimately lead to an accident. In the case of the ultra-light aircraft mentioned above (a few hundred kg), such as two-seat helicopters, the weight of the passenger alone has a significant effect on the aircraft's mass distribution, i.e. the position of the centre of gravity. Thus, there is a difference in terms of stability and controllability between an aircraft taking off with or without a passenger. However, the position of the aircraft's centre of gravity is determined not only by the passengers or cargo, but also by the fuel loaded in the aircraft. A decrease in fuel can also cause a shift in the centre of gravity during flight, which changes the flight parameters of the aircraft.

Several solutions are known in the state of the art for changing and compensating the aircraft's centre of gravity in flight. The most common method uses a number of fixed fuel tanks with fluid communication between them via pipelines. During flight, the centre of gravity shift due to the loss of fuel is compensated by transferring fuel from one tank to another by means of a pump. Such a solution is described, for example, in US Patent US 9,205,913 B2, which describes a rotorcraft (autogiro) with multiple fuel tanks arranged in one or more laterally opposite positions, longitudinally opposite positions and vertically opposite positions. The fuel tanks are connected to a fuel distribution system which is in fluid communication with all tanks via one or more pumps. The pumps are controlled by a control system in such a way as to dynamically distribute the fuel quantity between the tanks, maintaining the aircraft's centre of gravity in a stable position. Patent US 4,591,115 describes a fuel distribution system designed to maintain the centre of gravity of a multi-engine aircraft within a suitable range and to provide a continuous supply of fuel to the engines. To do this, the fuel is moved between fuel tanks fixed to the aircraft during flight. In the solution presented, at least one larger and one smaller tank are used, with pumps being used to transfer fuel from the larger tank to the smaller tank if the amount of fuel drops below a predetermined level.

Although the above solutions are suitable for some degree of center of gravity shifting, they require a complex system with one or more pumps. For ultra-light aircraft, where weight reduction is an important consideration, the weight of the pumps and associated auxiliary equipment (e.g. batteries) would be a significant additional burden. In addition, pumps can be a source of maintenance and failure, and their use and operation increase the cost of the aircraft. A further disadvantage of pump-based solutions is that the (non-negligible) mass of the fixed fuel tanks does not participate in the centre of gravity compensation, so only the mass of the fuel can be used for this purpose. However, as the amount of fuel is reduced during flight, the centre of gravity compensation may deteriorate. A further disadvantage is that, since the relative position of the fuel tanks is fixed, weight shifting by pumping the fuel can only be achieved along the straight lines connecting the centres of gravity of the fuel tanks.

Balance weights are still used less frequently to compensate the centre of gravity of an aircraft. These have the obvious disadvantage of extra weight and therefore have limited or no application in ultralight aircraft.

The aim of the invention is to provide a fuel storage system for controlling the centre of gravity of an aircraft that is free from the disadvantages of prior art solutions. In particular, the object of the invention is to provide a fuel storage system which makes it possible to compensate for the centre of gravity of an aircraft in a simpler, more reliable manner and with a smaller additional weight compared to previous solutions.

The invention also aims to provide a fuel storage system that does not only redistribute mass along a line (e.g. a line connecting the centres of gravity of two fixed position fuel tanks).

It has been recognised that there are no known solutions in the state of the art where the aircraft's centre of gravity is compensated by moving one or more fuel tanks of the aircraft.

It has been also recognised that if one or more fuel tanks are not fixed to the aircraft but are attached in a way that can be moved along a constraint path, the mass of the fuel tank can be involved in the centre of gravity compensation and the fuel tank can be moved manually to the desired position before take-off for optimum mass distribution.

It has been also recognised that by moving and securing the fuel tank along the constraint path, fuel can be transferred from one tank to another by gravity alone, without the use of a pump, thus providing a reliable way to achieve centre of gravity compensation.

According to the invention, this object is achieved by a fuel storage system according to claim 1 and an aircraft according to claim 15.

Some preferred embodiments of the invention are defined in the dependent claims.

Further details of the invention will now be described with reference to the accompanying drawings. In the drawing,
Figure 1a is a schematic view of an exemplary embodiment of a fuel storage system according to the invention;
Figure 1b is a schematic view of the fuel storage system shown in Figure 1a equipped with a moving device;
Figure 1c is a schematic view of an aircraft incorporating the fuel storage system shown in Figure 1a;
Figure 2a is a schematic view of another exemplary embodiment of a fuel storage system according to the invention;
Figure 2b is a schematic view of an aircraft incorporating the fuel storage system shown in Figure 2a;
Figure 3a is a schematic view of an embodiment of a fuel storage system according to the invention comprising two fuel tanks incorporating a hinged fastening, as installed in an example aircraft;
Figure 3b is a schematic side view of the aircraft of Figure 3a, shown from the other side;
Figure 4a is a schematic view of the fuel tank of the fuel storage system shown in Figure 3a in a first position along the constraint path;
Figure 4b is a schematic view of the fuel tank of the fuel storage system shown in Figure 3a in a second position along the constraint path;
Figure 4c is a schematic view of the fuel tank of the fuel storage system shown in Figure 3a in a third position along the constraint path;
Figure 5a is a schematic view of an embodiment of a fuel storage system of the invention comprising two fuel tanks in a rail system, as installed in an example aircraft;
Figure 5b is a schematic view of the aircraft of Figure 5a shown from the other side;
Figure 6a is a schematic view of the fuel tank of the fuel storage system shown in Figure 5a showing a first position of the fuel tank along the constraint path;
Figure 6b is a schematic view of the fuel tank of the fuel storage system shown in Figure 5a showing a second position of the fuel tank along the constraint path;
Figure 6c is a schematic view of the fuel tank of the fuel storage system shown in Figure 5a showing a third position of the fuel tank along the constraint path;

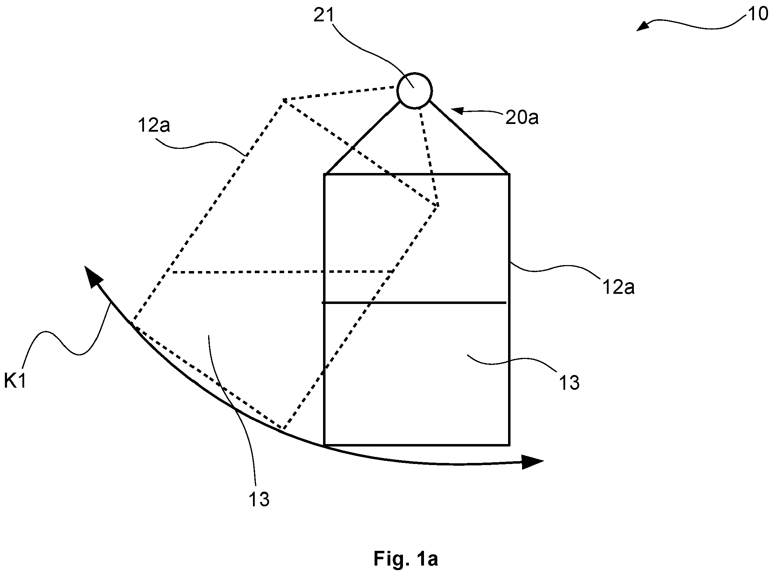

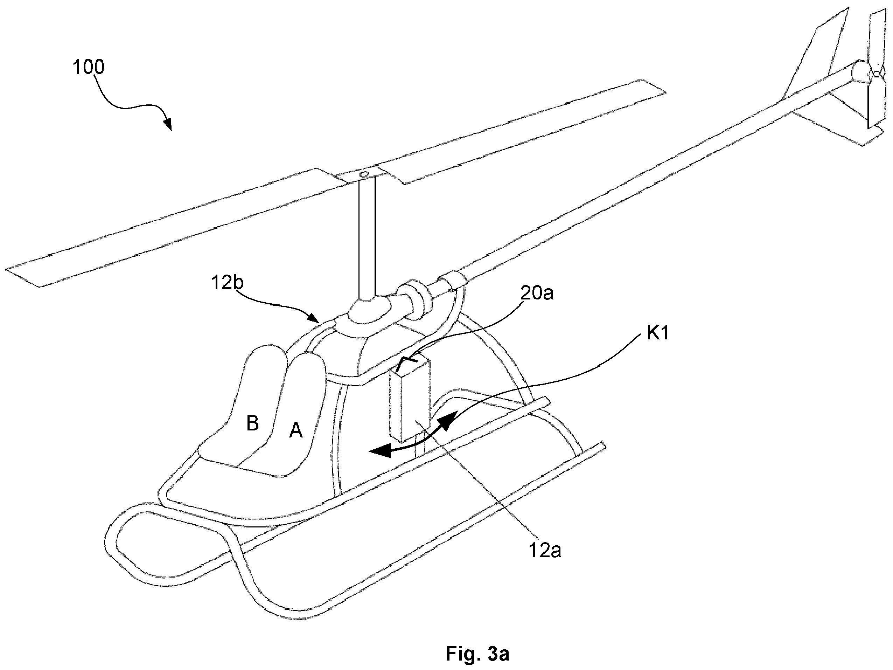

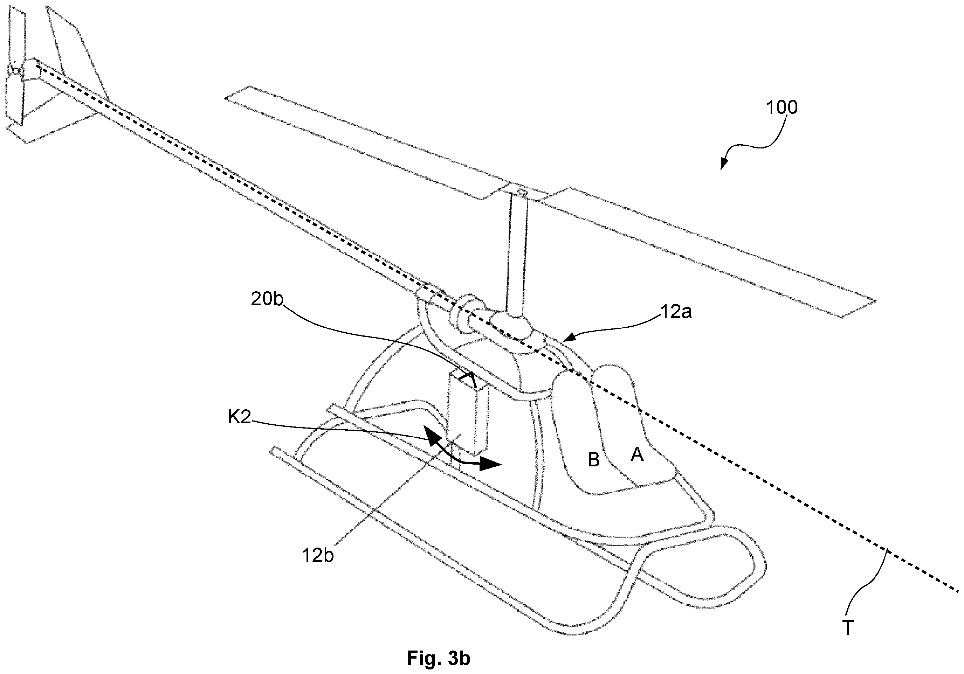

Figure 1a is a schematic view of an exemplary embodiment of the fuel storage system 10 according to the invention for providing centre of gravity compensation for aircraft 100. In this embodiment, the system 10 includes a fuel tank 12a and a mounting element 20a for securing the fuel tank 12a to the aircraft 100. In the context of the present description, aircraft 100 is understood to be an aircraft with one or more engines, preferably a so-called ultralight aircraft (e.g., an autogyro, a two-seat helicopter, a two-seat small aircraft, etc.), wherein fuel 13 required for the operation of the engine is stored by the system 10, in the fuel tank 12a in the present embodiment. The fuel tank 12a is in fluid communication with the one or more engines (not shown in the figures) via additional component parts (e.g., fuel pipes, fuel pump, possibly additional fuel tank, etc.) as will be apparent to the person skilled in the art. The fuel tank 12a preferably has an elongated shape as shown in Figures 3 to 6c, but may also be of the type commonly used in aircraft 100 in terms of material and design.

In the context of the present invention, the mounting element 20a is understood to be a component or group of components that is connected to the aircraft 100 (e.g., its airframe) and the fuel tank 12a, and which allows the fuel tank 12a to be displaced along the constraint path K1 and to be releasably secured along the constraint path K1. In other words, the fuel tank 12a is secured to the aircraft 100 by the mounting element 20a such that the fuel tank 12a, when the mounting element 20a is in the released (non-securing) state, can be displaced along the constraint path K1 relative to the aircraft 100 and secured therein at a given position along the constraint path K1 by the mounting element 20a.

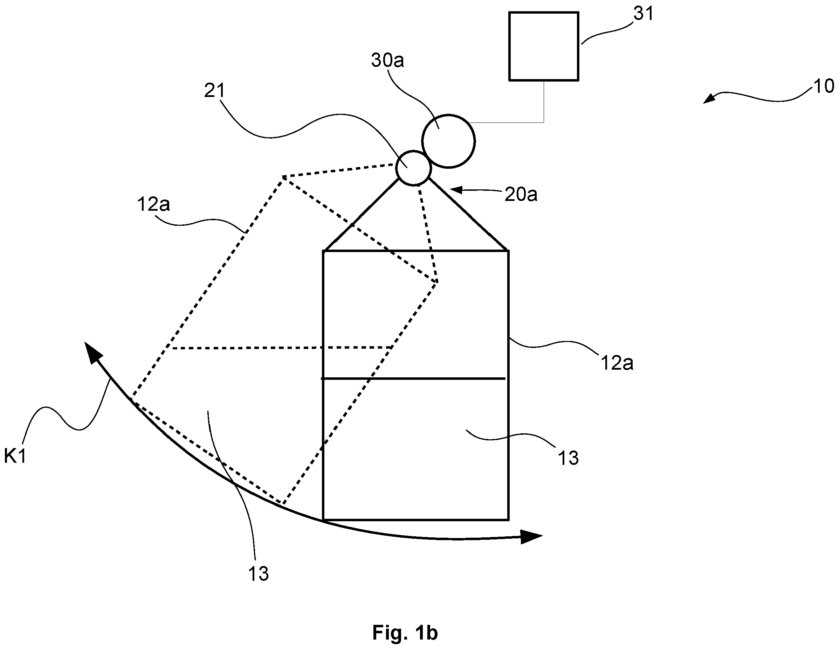

In the exemplary embodiments shown in Figures 1a and 1b, the mounting element 20a is configured as a hinged fastening 21 enabling the fuel tank 12a to be rotated about an axis. The axis of the hinged fastening 21 compared to the fuel tank 12a is configured such that the constraint path K1 is circularly curved. In Figures 1a and 1b, an offset position of the fuel tank 12a along the constraint path K1 is indicated by a dashed line.

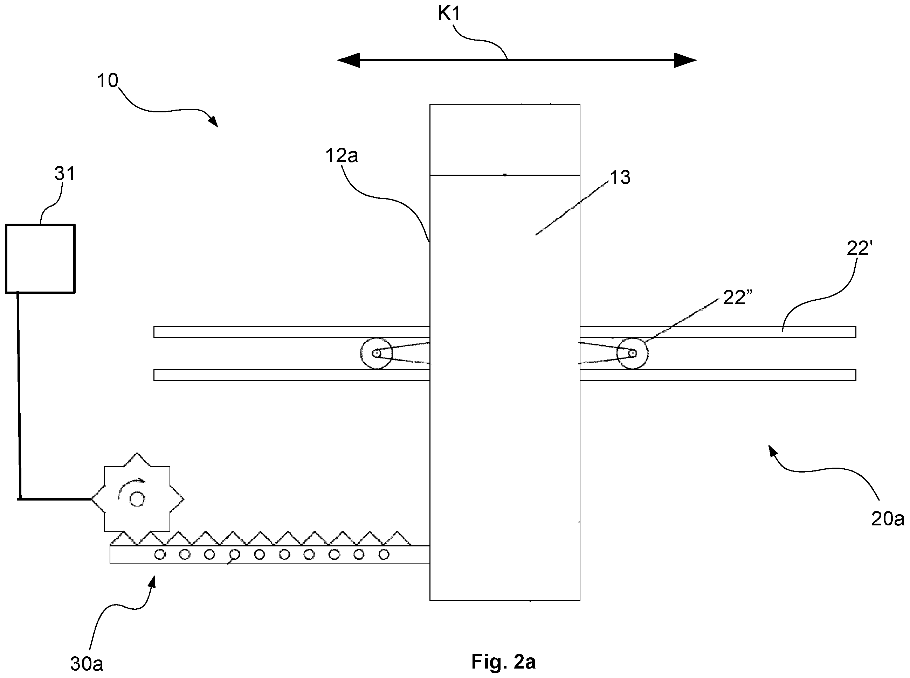

In the embodiment shown in Figure 2a, the mounting element 20a is provided as a rail system. In the context of the present invention, a rail system is understood to be a moving system comprising a guide rail 22' and a rail carriage 22" connected thereto, as is known to the person skilled in the art. The guide rail 22' and the rail carriage 22" are movable relative to each other in the directions along the guide rail 22', i.e. the guide rail 22' defines a constraint path K1. The rail system may be, for example, a sliding, rolling, roller bearing, roller or ball track system, as will be apparent to the person skilled in the art. In the embodiment shown in Figure 2a, the guide rail 22' is attached to the aircraft 100 and the rail carriage 22" is attached to the fuel tank 12a. In this embodiment, the constraint path K1 is straight, but embodiments where the constraint path K1 defined by the rail system has a different shape, e.g. curved, are also conceivable. It is noted however, that embodiments are also possible where the rail carriage 22" is attached to the fuel tank 12a and the guide rail 22' is attached to the aircraft 100.

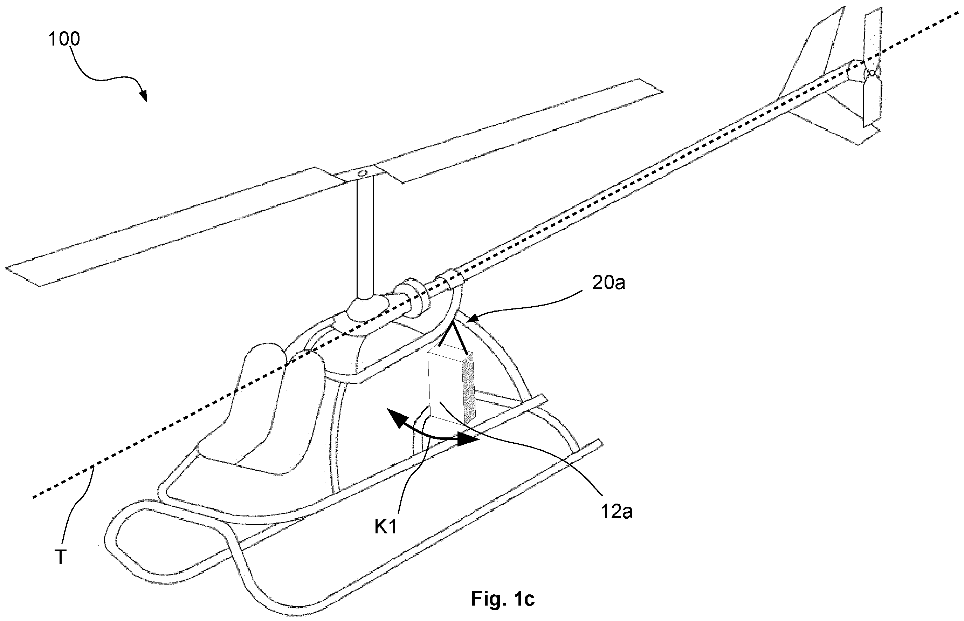

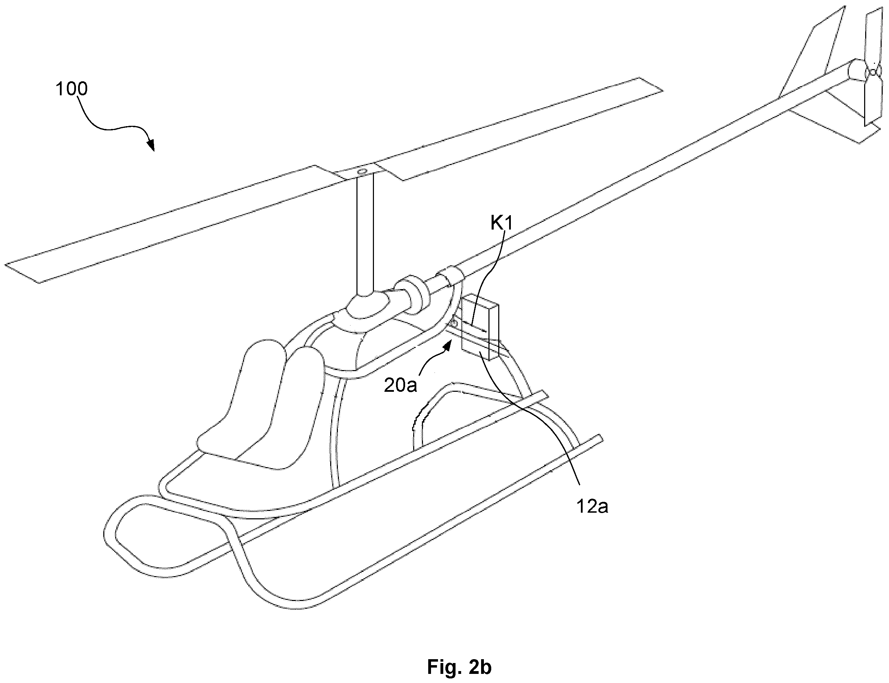

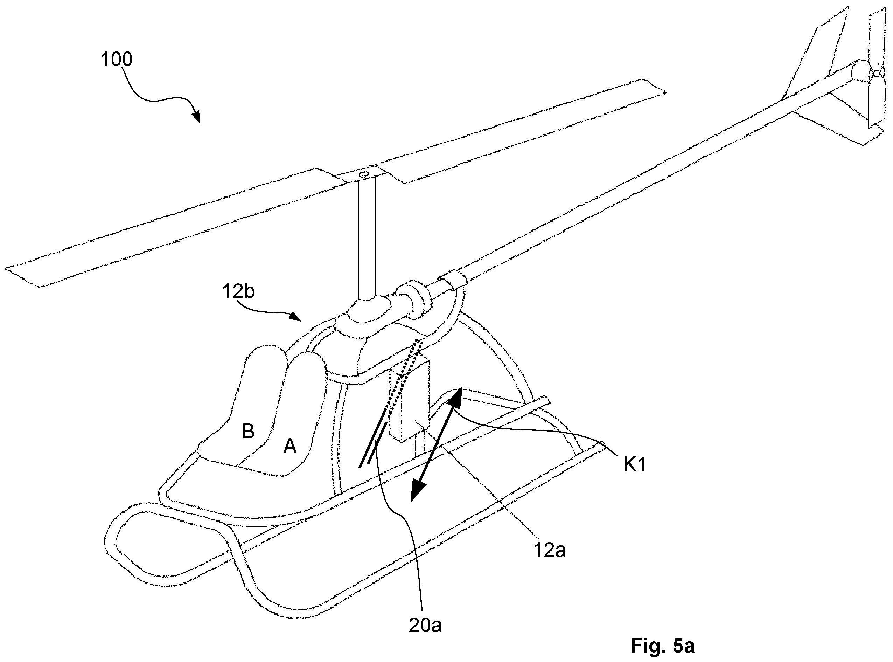

In the embodiments shown in Figures 1c and 2b, the constraint path K1 is configured such that the fuel tank 12a can be moved along the constraint path K1 in a direction substantially perpendicular to the longitudinal axis T of the aircraft 100. In this way, the centre of gravity of the aircraft 100 can be compensated along a direction perpendicular to the longitudinal axis T. Note that the constraint path K1 can also be configured such that the fuel tank 12a can be moved along the constraint path K1 in a direction substantially parallel to the longitudinal axis T of the aircraft 100, i.e., the constraint path K1 has a component parallel to the longitudinal axis T, as shown in Figures 3a and 5a. In this case, centre of gravity compensation can be implemented essentially parallel to the longitudinal axis T of the aircraft 100.

In a preferred embodiment, the mounting element 20 includes a moving device 30a for moving the fuel tank 12a along the constraint path K1. In the context of the present description, the moving device 30a is understood to be a device by means of which a force and, if appropriate, a torque of a certain direction and magnitude can be exerted, as is known to the person skilled in the art. In the embodiment shown in Figure 1b, for example, the moving device 30a comprises an electric motor connected via gears to the axis of the hinged fastening 21, which is also provided with gears. When the motor is actuated, the axis of the mounting element 20a rotates and the fuel tank 12a is displaced along the constraint path K1 (see dashed line). In the exemplary embodiment shown in Figure 2a, the moving device 30a also comprises an electric motor connected to the rail carriage 22" via a rack and pinion drive. It is noted that, in addition to the above, there are other ways known per se (e.g., spindle drive, etc.) by which the moving device 30a may be implemented, as will be apparent to the skilled person. The moving device 30a may be selected from a group consisting of a mechanical lifter, a pneumatic lifter and a hydraulic lifter. In embodiments comprising the moving device 30a, the releasable securing of the fuel tank 12a along the constraint path K1 is preferably carried out by means of the moving device 30a, but additional elements (e.g. a locking element) may be used for this purpose, as is apparent to the skilled person.

In a possible embodiment, the moving device 30a is configured to be remotely controllable and is provided with a control module 31 suitable for controlling the moving device 30a. The control module 31 can be, for example, a computer or other dedicated hardware (e.g., microcontroller, SoC, etc.) suitable for electronic control. In this way, the fuel tank 12a can be moved along the constraint path K1 and locked in position even during flight, i.e. the centre of gravity of the aircraft 100 can be shifted in flight, for example to compensate for the centre of gravity drift due to fuel depletion. In a preferred embodiment, the control module 31 is configured to control the moving device 30a as a function of the amount of fuel 13 in the fuel tank 12a. For example, one or more programs may be executed on the control module 31 in which different parameters (e.g., given angular position of the electric motor's shaft, etc.) of the moving device 30a are stored and assigned to different fuel levels and as is apparent to the skilled person. Thus, the displacement and locking of the fuel tank 12a along the constraint path K1, i.e. the centre of gravity compensation, is automatically performed as a function of the fuel level.

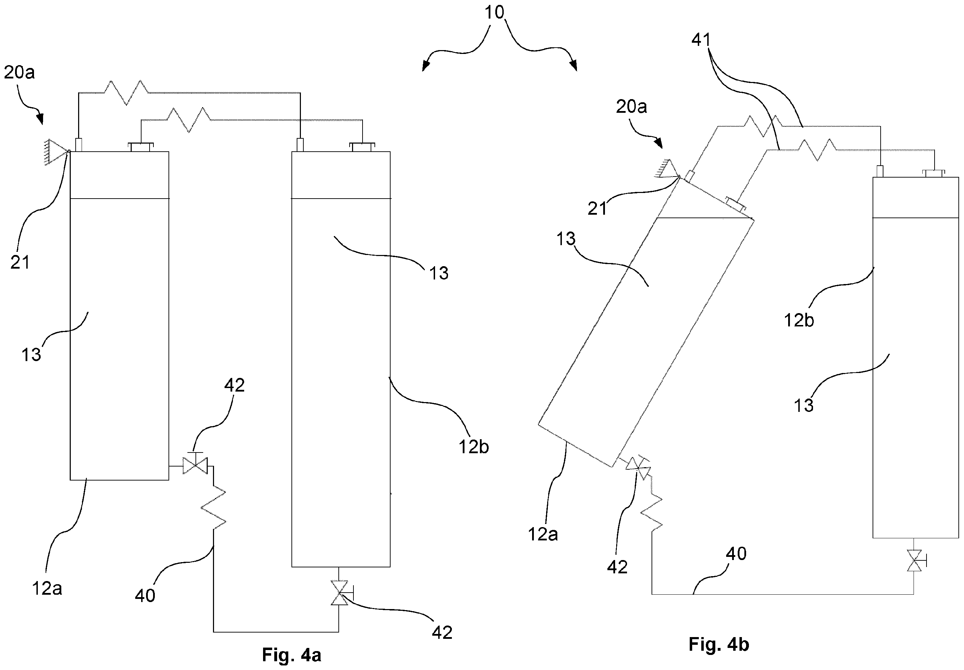

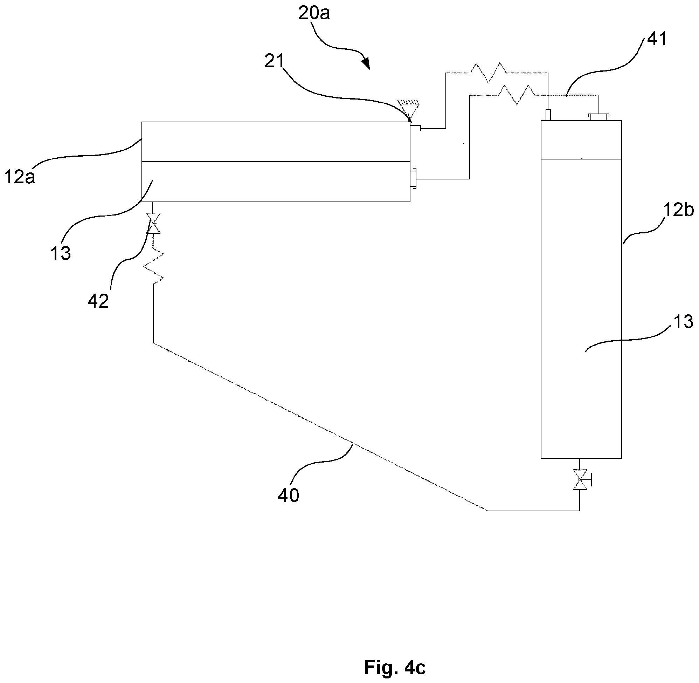

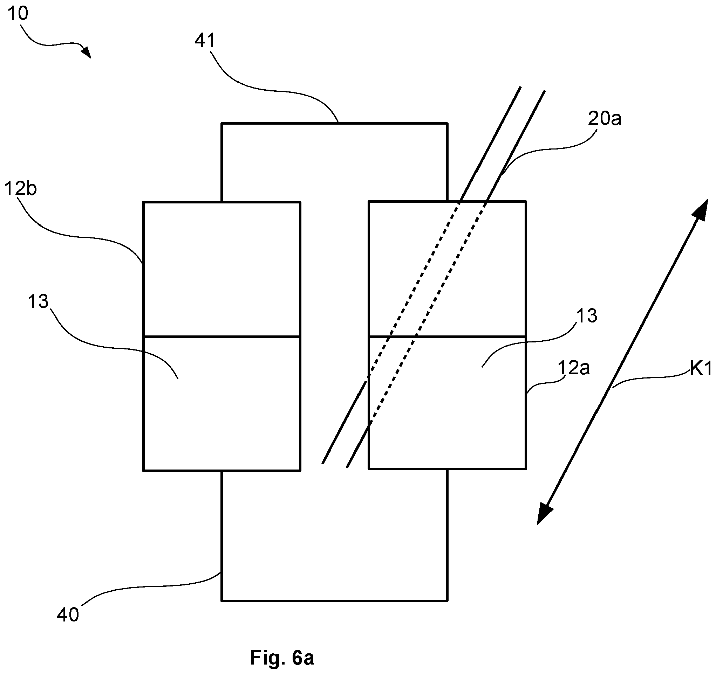

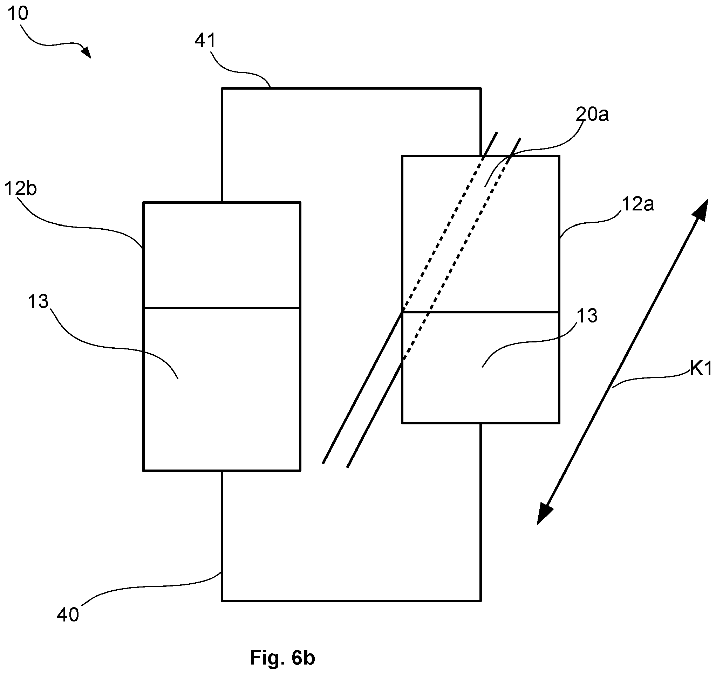

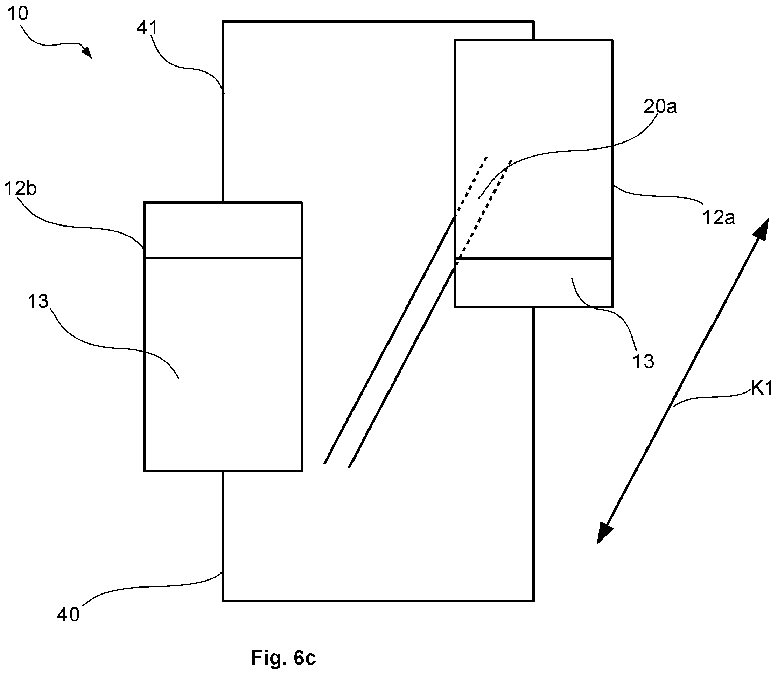

In a particularly preferred embodiment, the system 10 according to the invention includes a secondary fuel tank 12b coupled to the fuel tank 12a via a flexible conduit 40. That is, the fuel tanks 12a, 12b are in fluid communication with each other via the conduit 40, through which fuel 13 can flow from one fuel tank 12a, 12b to the other fuel tank 12b, 12a. In the present description, the flexibility of the conduit 40 is understood to be such that it is formed and made of a material that allows the fuel tanks 12a, 12b to move relative to each other. The conduit 40 may be made of, for example, rubber or flexible plastic as is known to the skilled person. In this embodiment, the constraint path K1 of the fuel tank 12a is configured and the conduit 40 is coupled to the fuel tanks 12a, 12b such that, in the rest position of the aircraft 100 prior to take-off and in at least one position along the constraint path K1 of the fuel tank 12a, at least a portion of the fuel 13 in the fuel tank 12a is allowed to flow by gravity into the secondary fuel tank 12b. Such configurations are shown, for example, in Figures 4a-4c and Figures 6a-6c, where a hinged fastening 21 and a rail system comprising a guide rail 21' and a rail carriage 22" provide for the guidance of the fuel tank 12a along the forced track K1. In the context of the present description, the rest position of the aircraft 100 prior to take-off is understood to be the position that aircraft 100 assumes while standing on a horizontal runway or other horizontal surface. By the flow of fuel 13 by gravity, it is meant that the fuel 13 in the fuel tanks 12a, 12b flows through the conduit 40 without the use of any other auxiliary equipment (e.g., a pump), solely under the force of gravity, as is known to the skilled person. Thus, the arrangement of the constraint path K1 is such that by displacing the fuel tank 12a along the forced path K1, the level of fuel 13 in the fuel tank 12a can rise above the level of fuel 13 in the fuel tank 12b. The fuel 13 then begins to flow through the conduit 40 until the fuel levels in the fuel tanks 12a, 12b are at the same level. The fuel tanks 12a, 12b are preferably arranged on opposite sides of a vertical bisector plane situated along the longitudinal axis T of the aircraft 100, i.e. on substantially opposite sides of the plane of symmetry of the aircraft 100, for example as shown in Figures 3a and 5a. In this way, the flow of fuel 13 from the fuel tank 12a to the fuel tank 12a can achieve a centre of gravity shift in a direction perpendicular to the longitudinal axis T.

In an exemplary embodiment, the flexible conduit 40 is provided with a tap 42 for controlling the flow of fuel 13 therethrough, by closing which the flow of fuel between the fuel tanks 12a, 12b can be prevented. Thus, in the embodiments illustrated in Figures 3a and 5a, by closing the tap 42 and moving the fuel tank 12a, substantially only the centre of gravity of the aircraft 100 along the longitudinal axis T occurs. Preferably, the fuel tanks 12a, 12b are also connected to each other by one or more flexible auxiliary conduit 41 so that pressure differences generated during the flow of fuel can be equalized.

The system 10 according to the invention preferably comprises a secondary mounting element 20b for securing the secondary fuel tank 12b to the aircraft 100, the secondary mounting element 20b is configured to allow the secondary fuel tank 12b to be displaced along a secondary constraint path K2 and to be releasably secured along the secondary constraint path K2.

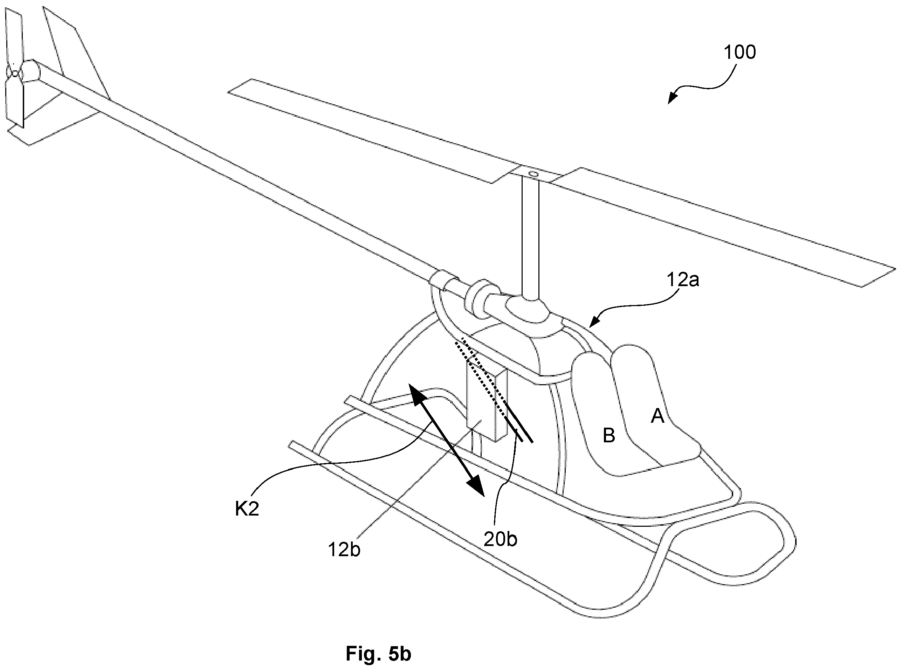

In the context of the present invention, the mounting element 20b is understood to be a component or group of components coupled to the aircraft 100 (e.g., its airframe) and the fuel tank 12b, and which allows for the displacement of the fuel tank 12b along the constrained path K2 and the releasable locking of the fuel tank 12b along the constrained path K2. In other words, the fuel tank 12b is secured to the aircraft 100 by the mounting element 20b such that the fuel tank 12b, when the mounting element 20b is in the released (non-securing) state, can be displaced along the constraint path K2 relative to the aircraft 100 and secured therein at a given constraint path K2 position by the mounting element 20b. The mounting element 20b can be a hinged fastening or a rail system, as described above, similar to the mounting element 20a. Preferably, the constraint path K2 is configured such that the fuel tank 12b can be moved along the constraint path K2 in a direction substantially parallel to the longitudinal axis T of the aircraft 100, i.e. the constraint path K2 has a component parallel to the longitudinal axis T, as shown in Figures 3b and 5b.

Constraint paths K1 and K2 are preferably formed so that, by moving fuel tanks 12a, 12b along the paths, fuel 13 in fuel tanks 12a, 12b can flow by gravity from one fuel tank 12a, 12b to the other fuel tanks 12b, 12a when the aircraft 100 is at rest before take-off. In other words, in this embodiment, the fuel 13 can be transferred not only from the fuel tank 12a to the fuel tank 12b, but also vice versa, if applicable.

In a preferred embodiment, the secondary mounting element 20b includes a secondary moving device for moving the secondary fuel tank 12b along the secondary constraint path K2 (not shown in figures). The secondary moving device may preferably be of the same configuration as the moving device 30a, for example.

The invention also relates to an aircraft 100 comprising a fuel storage system 10 according to the invention.

The system 10 can be used in the following ways. For embodiments comprising a single fuel tank 12a, preferably prior to take-off of the aircraft 100, the fuel tank 12a is moved to and locked in position along the constraint path K1 in accordance with the expected load of the aircraft 100. For example, if the aircraft 100 is not carrying a passenger, the fuel tank 12a is moved towards the passenger side as shown in Figures 1c and 2b, marked with the letter B. The fuel tank 12a may be moved manually by manual force or by means of the moving device 30.

For example, in embodiments including fuel tanks 12a, 12b, if the aircraft 100 is not carrying passengers, the fuel tank 12a is preferably moved along the constraint path K1 prior to the aircraft 100 taking off as shown in Figures 3a or 5a. This will cause at least part of the fuel 13 in the fuel tank 12a to flow into the fuel tank 12b, i.e. the centre of gravity will be shifted towards the passenger side. In a preferred embodiment, if the centre of gravity is to be shifted towards the pilot side, indicated by the letter A, the fuel tank 12b is shifted along the constraint path K2 and at least part of the fuel 13 in the fuel tank 12b is transferred to the fuel tank 12a. It is noted that the movement of the fuel tanks 12a, 12b along the constraint paths K1, K2 may also take place after the aircraft 100 has taken off by means of the control module 31. If only compensation of the centre of gravity parallel to the longitudinal axis T is required, then by closing the tap 42, the fuel tanks 12a, 12b can be moved along the constraint paths K1, K2 without fuel flow 13 between them.

It will be apparent to those skilled in the art that various modifications are conceivable to the above disclosed embodiments without departing from the scope of protection determined by the appended claims.

## Claims

1. A fuel storage system (10) for controlling the centre of gravity of an aircraft (100), comprising at least one fuel tank (12a) and a mounting element (20a) for mounting the fuel tank (12a) to the aircraft (100), **characterized in that** the mounting element (20a) is configured to allow the fuel tank (12a) to be displaced along a constraint path (K1) and to be releasably secured along the constraint path (K1).

2. A fuel storage system (10) according to claim 1, **characterized in that** the constraint path (K1) is configured such that the fuel tank (12a) is movable along the constraint path (K1) in a direction substantially perpendicular to the longitudinal axis (T) of the aircraft (100).

3. A fuel storage system (10) according to claim 1, **characterized in that** it comprises a secondary fuel tank (12b) coupled to the fuel tank (12a) by means of a flexible conduit (40), the conduit (40) and the constraint path (K1) of the fuel tank (12a) are configured to allow at least a portion of the fuel (13) in the fuel tank (12a) to flow by gravity into the secondary fuel tank (12b) in at least one position along the constraint path (K1) of the fuel tank (12a), when the aircraft (100) is at rest prior to take-off.

4. A fuel storage system (10) according to claim 3, **characterized in that** the flexible conduit (40) is provided with a tap (42) for controlling the flow of fuel therethrough.

5. A fuel storage system (10) according to claim 3 or 4, **characterized in that** it comprises a secondary mounting element (20b) for mounting the secondary fuel tank (12b) to the aircraft (100), the secondary mounting element (20b) being configured to allow the secondary fuel tank (12b) to be displaced along a secondary constraint path (K2) and to be releasably secured along the secondary constraint path (K2).

6. A fuel storage system (10) according to any one of claims 1 to 5, **characterized in that** at least one of the mounting elements (20a, 20b) is configured as a hinged fastening (21) enabling the respective fuel tank (12a, 12b) to be rotated about an axis.

7. A fuel storage system (10) according to any one of claims 1 to 5, **characterized in that** at least one of the mounting elements (20a, 20b) is configured as a rail system.

8. A fuel storage system (10) according to any one of claims 1 to 7, **characterized in that** the mounting element (20a) comprises a moving device (30a) for moving the fuel tank (12a) along the constraint path (K1).

9. A fuel storage system (10) according to any one of claims 1 to 8, **characterized in that** the secondary mounting element (20b) comprises a secondary moving device for moving the secondary fuel tank (12b) along the secondary constraint path (K2).

10. A fuel storage system (10) according to any one of claims 8 or 9, **characterized in that** the moving devices (30a) are selected from the group consisting of a mechanical lifter, a pneumatic lifter and a hydraulic lifter.

11. A fuel storage system (10) according to any one of claims 8 to 10, **characterized in that** at least one of the moving devices (30a) is configured to be remotely controllable and is provided with a control module (31) for controlling the moving device (30a).

12. A fuel storage system (10) according to any one of claims 3 to 11, **characterized in that** the fuel tanks (12a, 12b) are arranged on opposite sides of a vertical bisector plane situated along a longitudinal axis (T) of the aircraft (100).

13. A fuel storage system (10) according to any one of claims 1 or 3 to 12, **characterized in that** at least one of the constraint paths (K1, K2) is configured such that the respective fuel tank (12a, 12b) is movable along the constraint path (K1, K2) in a direction substantially parallel to the longitudinal axis (T) of the aircraft (100).

14. A fuel storage system (10) according to any one of claims 1 to 13, **characterized in that** the at least one fuel tank (12a, 12b) has elongated shape.

15. An aircraft (100) **characterised in that** it comprises a fuel storage system (10) according to any one of claims 1 to 14.
